# EUROPÄISCHE PATENTSCHRIFT

(11) **EP 1 118 528 B1**
(45) Veröffentlichungstag und Bekanntmachung des Hinweises auf die Patenterteilung: **03.08.2005**
(21) Anmeldenummer: 01100083.3
(22) Anmeldetag: 11.01.2001
(51) Int. Cl.: B62D 25/04

(54) **Karosserieelement mit Verstärkungsblech**
Body element with a reinforcing sheet
Elément de carosserie comportant une tôle de renforcement

(30) Priorität: 22.01.2000 DE 10002617
(43) Veröffentlichungstag der Anmeldung: 25.07.2001
(73) Patentinhaber: Volkswagen Aktiengesellschaft, 38436 Wolfsburg (DE)
(72) Erfinder: Welsch, Frank, Dr., 38179 Schwülper (DE); Krauth, Werner, 38162 Cremlingen (DE)

(56) Entgegenhaltungen:
- EP-A- 0 856 455
- DE-A- 19 531 957
- US-A- 5 984 402
- PATENT ABSTRACTS OF JAPAN vol. 2000, no. 01, 31. Januar 2000 (2000-01-31) -& JP 11 278302 A (ISUZU MOTORS LTD), 12. Oktober 1999 (1999-10-12)

## Beschreibung

Die Erfindung betrifft ein Verfahren zur Herstellung eines Karosserieelements einer Karosseriestruktur eines Kraftfahrzeugs, insbesondere Träger, Schweller, Holm und/oder Säule, wobei das Karosserieelement ein Innen- und Außenblech aufweisendes Hohlprofil umfasst, in welchem wenigstens ein Verstärkungsblech angeordnet ist. Karosserieelemente dieser Art sind bereits bekannt. Sie weisen Versteifungen auf, welche im inneren des Hohlprofils als Verstärkungsblech ausgebildet sind. Das Verstärkungsblech ist vorzugsweise am Innenblech des Hohlprofils mittels Platinenschweißen oder Quetschnahtschweißen befestigt. Diese Befestigungen sind allerdings teuer herzustellen, da die zu verbindenden Bleche eine aufwendigen Vorbereitung erfordern. Insbesondere bei Verstärkungsblechen, an welche nur in Teilbereichen Versteifungen angebracht werden müssen, hat es sich als zweckmäßig erwiesen, Patchworktechnik einzusetzen, bei welcher einzelne Bleche schubfest verbunden werden, wobei die Bleche vorzugsweise mittels Punkt- oder Laserschweißen aufeinander geschweißt werden. Die Bleche werden dabei im unverformten Zustand miteinander verbunden und dann entsprechend der Vorgaben zu Profilen verformt. Die Profile werden dann an den entsprechenden Karosserieelementen angeschweißt. Hierzu wird im Stand der Technik das Dreiblechschweißen eingesetzt.

Die DE 195 31 957 A1 offenbart eine Karosseriestruktur, welche die Insassen im Falle eines Seitenaufpralls vor schweren Verletzungen schützen soll. Es werden hierzu Karosserieelemente, wie beispielsweise eine B-Säule vorgeschlagen, welche ein B-Säulen-Innenblech, ein B-Säulen-Außenblech und eine Verstärkung umfasst. Außerdem wird ein in Längsrichtung des Fahrzeugs verlaufenden Dachseitenholm, ein in Längsrichtung des Fahrzeugs verlaufenden Seitenschweller mit einem Seitenschweller-Innenblech offenbart. Die Karosseriestruktur weist eine in Querrichtung des Fahrzeugs verlaufende und mit der B-Säule und dem Dachseitenholm verbundene Mitteldachstrebe auf sowie eine in Querrichtung des Fahrzeugs verlaufende und an einem Außenende mit einem unteren Ende der B-Säule und mit dem Seitenschweller verbundene Versteifung. Die Versteifung umfasst mindestens einen u-förmiges Verstärkungsblech, ein Bodenblech und einen in Längsrichtung des Fahrzeugs verlaufenden und mit der Versteifung an einem Innenende verbundenen Mitteltunnel.

Die B-Säule ist als Hohlprofil mit einem geschlossenen Querschnitt ausgestaltet, welcher durch das B-Säulen-Innenblech und das B-Säulen-Außenblech sowie die Versteifung gebildet ist. Desweiteren sind die Dachseitenholme, Seitenschweller, Mitteldachstreben mit geschlossenem Querschnitt und ein durch das u-förmige Verstärkungsblech und den Boden gebildete Versteifung vorgesehen, welche ebenfalls einen geschlossenen Querschnitt bildet. Es ist darüber hinaus eine Tunnelverstärkung vorgesehen, die mit dem Mitteltunnel einen geschlossenen Querschnitt bildet.

Die Versteifung ist an der Innenseite der B-Säule befestigt und weist ein oberes, ein mittleres und ein unteres Verstärkungsblech auf. Das untere Ende des oberen Verstärkungsblechs ist überlappend mit dem oberen Ende des mittleren Verstärkungsblechs verschweißt, wobei jedoch das untere Ende des mittleren Verstärkungsblechs vom oberen Ende des unteren Verstärkungsblechs mit einer vorbestimmten Lücke getrennt ist. Dieser Trennabschnitt zwischen dem mittleren und dem unteren Verstärkungsblech ist ein vorgesehener festigkeitsunstetige Abschnitt der B-Säule. In der Ausführungsform des Standes der Technik ist eine Verbindungsplatte zwischen dem unteren Ende des mittleren Verstärkungsblechs und dem oberen Ende des unteren Verstärkungsblechs vorgesehen. Nachteil dieser Versteifung ist, dass zur Verbesserung der Verdrehsteifigkeit der Säule, vorzugsweise im Bereich der Verbindung mit den Dachelementen oder der Gurtumlenkung, Verstärkungsbleche in Längsrichtung mit unterschiedlicher Materialstärke ausgeführt sein müssen.

Ein Verstärkungsblech dieser Art ist in der DE 197 35 640 offenbart. Zwischen dem Innenblech und dem Außenblech der dort offenbarten B- oder Säule ist dabei das Verstärkungsblech angeordnet und erstreckt sich in Längsrichtung der Säule nach oben und unten. Das Verstärkungsblech weist ein im wesentlichen U-förmiges Profil auf, dessen Schenkel an den Enden nach außen abgebogen sind, wobei sie gegen das Innenblech anliegen und mit diesem verschweißt sind. Das Ende des einen Schenkels ist mit einem Halteblech verschweißt. Damit Zugkräfte eines Sicherheitsgurts, welcher an der Säule befestigt ist, senkrecht zur Längsachse der Säule bei einem Unfall zum Teil in das Verstärkungsblech eingeleitet werden, weist das Verstärkungsblech von unten nach oben unterschiedliche Materialstärke auf.

Nachteil dieser Verstärkung ist, dass das Anschweißen des Verstärkungsbleches in den dickeren Bereichen mittels Punktschweißen problematisch ist. Als Alternative kommen vorgenannte Patchworktechniken in Frage, bei denen auf ein Grundblech ein oder mehrere Zusatzbleche geschweißt werden. Insbesondere beim Zusammenschweißen mehrerer Bleche sind jedoch die Materialstärken der jeweiligen Bleche zu beachten. Die zulässigen Materialstärken werden zum einen durch das Dickenverhältnis der Bleche bestimmt, darüber hinaus darf eine bestimmte maximale Dicke beim Punktschweißen nicht überschreiten werden. Abweichungen von den zulässigen Materialstärken, führen zu Problemen beim Schweißen und zu Mängeln an der Schweißverbindung. Sollen verzinkte Bleche miteinander verbunden werden, ist darüber hinaus das Dreiblechschweißen ungeeignet, da dies wegen der verschiedenen Metalle zu Fehlern im Gefüge der Schweißstellen führt.

Schließlich ist aus der EP 0 856 455 A2 ein Karosserieelement einer Karosseriestruktur eines Kraftfahrzeugs bekannt, das ein Innen- und Außenblech aufweisendes Hohlprofil umfasst, in welchem ein Verstärkungsblech angeordnet ist, wobei das Verstärkungsblech ein Grundblech und ein darauf geschweißtes Zusatzblech umfasst und das Grundblech vom Zusatzblech ausgenommene Flanschbereiche aufweist, welche an dem Hohlprofil anschweißbar sind.

Aufgabe der Erfindung ist es nunmehr, ein Verfahren zur Herstellung eines Karosserieelements mit Verstärkungsblech anzugeben, mit dem Versteifungen einfach und kostengünstig am Hohlprofil befestigt werden können.

Das erfindungsgemäße Verfahren zur Herstellung eines Karosserieelements einer Karosseriestruktur eines Kraftfahrzeugs, insbesondere Träger, Schweller, Holm und/oder Säule, wobei das Karosserieelement ein Innen- und Außenblech aufweisendes Hohlprofil umfasst, in welchem wenigstens ein Verstärkungsblech, bestehend aus wenigstens einem Grundblech mit konstanter Materialstärke und wenigstens einem aufgeschweißten Zusatzblech, angeordnet ist und wobei das Grundblech von dem Zusatzblech ausgenommene Flanschbereiche aufweist, welche an das Hohlprofil anschweißbar sind, zeichnet sich dadurch aus, dass zunächst eine Mehrzahl ungeformter Zusatzbleche derart auf dem ungeformten Grundblech stufenweise aufeinander mittels Punktschweißen befestigt werden, dass das jeweils vorgeordnete Zusatzblech die Grundplatine für ein darauf geschweißtes nachgeordnetes Zusatzblech bildet und das Zusatzblech in Form einer Grundplatine vom nachgeordneten Zusatzblech ausgenommene Flanschbereiche aufweist, welche mit dem jeweils vorgeordneten Blech verschweißt werden, nachfolgend das Grundblech und die Zusatzbleche nach dem Schweißverbinden, vorzugsweise u-förmig, zum Verstärkungsblech umgeformt werden, im Anschluss daran das Verstärkungsblech über die vom nachgeordneten Zusatzblech ausgenommenen Flanschbereiche des Grundblechs durch Schweißpunkte am Hohlprofil, vorzugsweise am Innenblech desselben, befestigt wird und schließlich das Innenblech mit dem Außenblech verbunden und in die Karosseriestruktur eingefügt wird.

Vorteil der erfindungsgemäßen Lösung ist, dass das Verstärkungsblech ausschließlich in den vorgesehenen Verstärkungsbereichen mit Zusatzblechen ausstattbar ist und dadurch das Gewicht des Verstärkungsblechs und damit des Karosserieelements verringert werden kann. Neben der Gewichtseinsparung wird die Herstellung der Verstärkungsbleche und des Hohlprofils vereinfacht, da die Befestigung der Bleche aneinander durch einfaches Punktschweißen beziehungsweise Zweiblechschweißen möglich ist.

Aufwendige Vorbereitungsarbeiten an den Schweißkanten entfallen, wozu bislang gesonderte Verfahren erforderlich gewesen sind. Die Herstellung der Verstärkungsbleche kann so in den Produktionsprozess integriert werden, was Kostenvorteile mit sich bringt.

Dadurch, dass das Zusatzblech wenigstens eine Grundplatine und wenigstens ein darauf geschweißtes nachgeordnetes Zusatzblech umfasst und dass die Grundplatine vom nachgeordnetes Zusatzblech ausgenommene Flanschbereiche aufweist, welche mit dem Grundblech und/oder einem mit dem Grundblech verbundenen Zusatzblech verschweißbar sind, können mehrere Zusatzbleche auf das Grundblech geschweißt werden, wobei Grundplatinen stets Flanschbereiche aufweisen, welche mittels Zweiblechschweißen verbunden werden können. Es ist somit in vorteilhafter Weise möglich, jede gewünschte Materialstärke mittels Punktschweißen herzustellen.

Das Grundblech, die Grundplatine und/oder das Zusatzblech weisen konstante Materialstärke auf.

Vorteilhaft sind hierbei Bleche jeder Materialstärke verwendbar, so dass die Verstärkungsbleche in jeder beliebigen Materialstärke herstellbar sind. Je nach dem welche Form der Verstärkung hergestellt werden soll, sind die Zusatzbleche entsprechend zuzuschneiden und auf dem Grundblech und/oder den Zusatzblechen beziehungsweise den Grundplatinen anzuordnen. Die Anzahl der übereinander angeordneten Bleche ist lediglich durch die Geometrie der Ausnehmungen an den Flanschbereichen beschränkt.

Es hat sich als vorteilhaft erwiesen, dass das Verstärkungsblech im wesentlichen als U-Profil ausgebildet wird, wobei die Flanschbereiche Schenkel zum Befestigen aufweisen können, welche zumindest abschnittsweise an der Befestigungsfläche des Hohlprofils eben anliegen. Das als U-Profil ausgebildete Verstärkungsblech kann somit durch einfaches Verschweißen der beiden aneinander liegenden Bleche, des Innen- oder Außenblech und des Grundblechs, verbunden werden.

Ausgestaltungen des Hohlprofils können dadurch erreicht werden, dass das und/oder die Zusatzbleche innen und/oder außen am U-Profil angeordnet sind. Hierzu ist vorgesehen, dass mehrere Zusatzbleche stufenweise auf dem Grundblech angeordnet sind. Von besonderem Vorteil kann es sein, dass das Grundblech und das oder die Zusatzbleche des Verstärkungsblechs verzinkt sind. Verzinkte Versteifungen sind durch die erfindungsgemäße Anordnung und Befestigung der Verstärkungsbleche im Hohlprofil in einfacher Weise und dauerhaft herstellbar.

Als besonders vorteilhaft hat sich die Verwendung des erfindungsgemäßen Verfahrens zur Herstellung einer B-Säule und/oder C-Säule in einer Karosseriestruktur eines Kraftfahrzeugs erwiesen. Dabei ist vorgesehen, dass die B-Säule und/oder Säule ein Hohlprofil aus Innen- und Außenblech bilden und wenigstens ein Verstärkungsblech bestehend aus Grundblech mit konstanter Materialstärke und wenigstens einem Zusatzblech, am Innenblech des Hohlprofils eben anliegende Flanschbereiche aufweist, welche am Innenblech durch Punktschweißen angeschweißt sind und dass die Bleche verzinkt sind.

Die Erfindung wird beispielhaft anhand der Zeichnung erläutert. Es zeigen
- Fig. 1: ein Karosserieelement mit einem u-förmigen Verstärkungsblech im Querschnitt senkrecht zur Längsachse mit zwei Zusatzblechen;
- Fig. 2a: ein Verstärkungsblech mit unterschiedlicher Materialstärke gemäß dem Stande der Technik im Querschnitt senkrecht zur Längsachse;
- Fig. 2b: ein Verstärkungsblech mit unterschiedlicher Materialstärke gemäß dem Stande der Technik im Querschnitt entlang der Längsachse;
- Fig. 3a: ein erfindungsgemäßes Hohlprofil mit u-förmigen Verstärkungsblech im Querschnitt senkrecht zur Längsachse;
- Fig. 3b: ein erfindungsgemäßes Hohlprofil mit u-förmigen Verstärkungsblech im Querschnitt entlang der Längsachse;

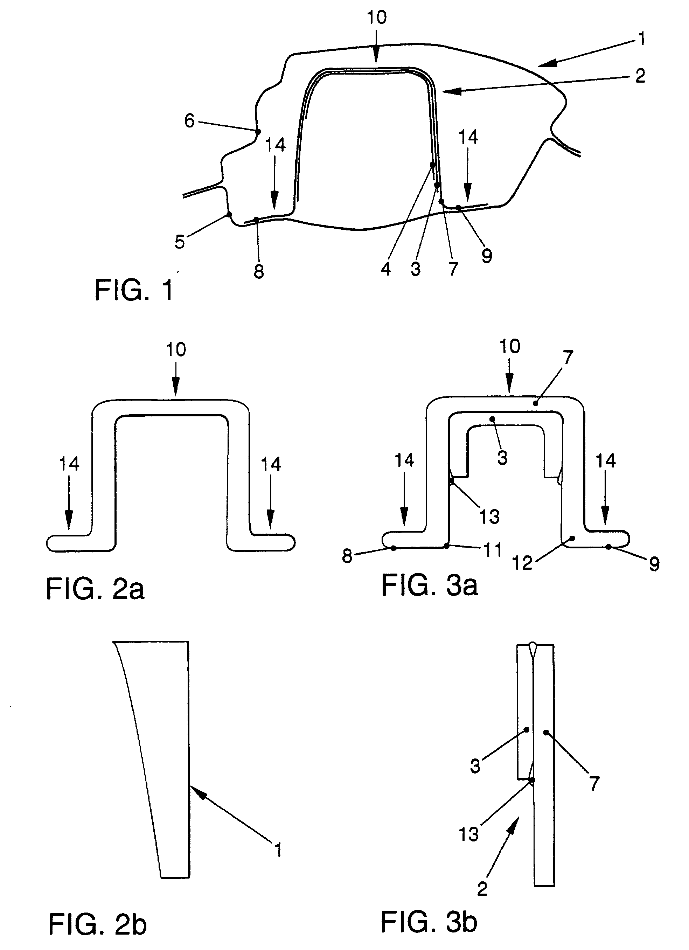

In Fig. 1 ist ein Karosserieelement 1 mit einem Verstärkungsblech 2 im Querschnitt senkrecht zur Längsachse mit Zusatzblechen 3, 4 gezeigt. Das Karosserieelement 1 ist dabei als Hohlprofil ausgebildet und weist ein Innenblech 5 und ein Außenblech 6 auf. Das Verstärkungsblech 2 ist im Inneren des Hohlprofils angeordnet und weist ein Grundblech 7 sowie eine Versteifung auf, die durch die Zusatzbleche 3, 4 gebildet wird. Die Zusatzbleche 3, 4 sind dazu auf dem Grundblech 7 befestigt. Das mit dem Grundblech 7 verbundene vorgeordnete Zusatzblech 3 dient dabei als Grundplatine für das nachgeordnete Zusatzblech 4. Das Grundblech 7 weist Schenkel 8, 9 auf, die am Innenblech 5 des Hohlprofils eben anliegen und mit diesem mittels einer Schweißverbindung verbunden sind. Das vorliegende Karosserieelement 1 weist hierzu auf den Schenkeln 8, 9 des Grundblechs 7 angebrachte Schweißpunkte auf, welche in der Zeichnung nicht dargestellt sind. Je nach dem in welcher Materialstärke das Verstärkungsblech 2 hergestellt werden soll, können weitere Zusatzbleche aufgeschweißt werden, wobei jeweils das vorgeordnete Zusatzblech als Grundplatine für das jeweils nachgeordnete Zusatzblech dient. Die Grund- oder Zusatzbleche werden durch einfaches Punktschweißen miteinander verbunden, da nur zwei Bleche an einer Schweißverbindung beteiligt sind. Dabei weisen jeweils die vorgeordneten Bleche Flanschbereiche auf, die von den nachgeordneten Blechen ausgenommen sind.

Die Längsachse ist in der Zeichnung nicht dargestellt und ist senkrecht zur Bildebene angeordnet. Die Stirnseite 10 des u-förmigen Verstärkungsblech 2 weist dort wo die Zusatzbleche 3, 4 angeordnet sind größere Materialstärke auf, als in den Bereichen ohne Zusatzbleche 3, 4. Dort wo eine Versteifung notwendig ist, kann diese mittels der erfindungsgemäßen Ausgestaltung des Verstärkungsblechs 2 durch einfaches Schweißverbinden der Zusatzbleche 3, 4 erreicht werden. Dabei wird Material eingespart, weil Übergangsbereiche zwischen den verstärkten und nicht verstärkten Bereichen des Verstärkungsblechs 2 wegfallen.

Die Zusatzbleche 3, 4 werden auf dem Grundblech 7 oder den Grundplatinen im unverformten Zustand aufgeschweißt. Nachdem alle Bleche zusammengeschweißt sind, kann das Verstärkungsblech 2 geformt werden. In der vorliegenden Zeichnung ist das Verstärkungsblech 2 als U-Profil geformt, wobei die Zusatzbleche 3, 4 im Inneren des U-Profils angeordnet sind. Andere Profilformen sind erfindungsgemäß auch vorgesehen. Sollen die Zusatzbleche 3, 4 über den Schenkelbeugen 11, 12 des Grundblechs 7 liegen, ist das U-Profil vorzugsweise so zu formen, dass die Zusatzbleche 3, 4 außerhalb des Profils liegen.

Bei der Verformung werden auch die Schenkel 8, 9 ausgebildet, welche in der vorliegenden Zeichnung ausschließlich aus Material des Grundblechs 7 bestehen. Sind die Zusatzbleche 3, 4 außen am Verstärkungsblech 2, das heißt außerhalb des U-Profils angeordnet, können auch mehrere Zusatzbleche 3, 4 die Materialstärke des Schenkels 8, 9 oder der Schenkelbeuge 11, 12 verstärken. Desweiteren ist erfindungsgemäß vorgesehen Zusatzbleche 3, 4 auf beiden Seiten des Verstärkungsblechs 2 anzubringen. In diesem Fall sind innen und außen am U-Profil des Verstärkungsblechs 2 Zusatzbleche 3, 4 angeordnet, so dass beliebige Versteifungsvarianten herstellbar sind.

Nachdem das Verstärkungsblech 2 mit dem Innenblech 5 verbunden ist, wird dieses mit dem Außenblech 6 verbunden und kann so in die Karrosseriestruktur integriert werden. In Fig. 2a ist ein Verstärkungsblech 2 mit unterschiedlicher Materialstärke gemäß dem Stande der Technik im Querschnitt senkrecht zur Längsachse gezeigt. Die Längsachse ist in der Zeichnung nicht dargestellt und liegt senkrecht zur Bildebene. In Fig. 2b ist das Verstärkungsblech 2 im Querschnitt parallel zur Längsachse gezeigt. Je nach dem in welcher Materialstärke die Versteifung erforderlich ist, muss das Verstärkungsblech 2 im wesentlichen kontinuierlich an Materialstärke zunehmen. Nachteilig ist dabei, dass stets Bereiche verstärkt ausgebildet sind, welche nichts zur Versteifung beitragen. Diese Übergangsbereiche tragen zu erhöhtem Gewicht der Verstärkungsbleche 2 bei. Desweiteren sind insbesondere bei verzinkten Blechen, welche durch Schweißen miteinander verbunden werden sollen, die Materialstärke des Verstärkungsblechs und das Verhältnis der miteinander verbundenen Bleche begrenzt. Deshalb sind Versteifungen mit Verstärkungsblechen des Standes der Technik nur in begrenzten Maße herstellbar.

In Fig. 3a ist ein erfindungsgemäßes u-förmiges Verstärkungsblech 2 mit einem Zusatzblech 3 im Querschnitt senkrecht und in Fig. 3b parallel zur Längsachse gezeigt. Das Zusatzblech 3 ist mit dem Grundblech 7 an Schweißpunkten 13 verbunden und u-förmig ausgestaltet. Die Anordnung des Zusatzblechs 3 auf dem Grundblech 7 ermöglicht es, die unterschiedlichen Verformungsverhalten der Karosserieelemente, zu realisieren. Beim U-Profil ist es möglich, das Zusatzblech 3 so anzuordnen, dass die Materialstärke eines, zweier oder aller U-Schenkel vergrößert wird. Es ist auch vorgesehen einzelne Winkelbereiche zu versteifen, indem das Zusatzblech 3 ausschließlich in diesem Winkelbereich angeordnet wird. Dies wird durch ein asymmetrisches Verformen des Verstärkungsblechs 2 erreicht.

Sowohl die in Fig. 2 als auch die in Fig. 3 gezeigten Verstärkungsbleche 2 weisen Flanschbereiche 14 mit Schenkeln 8, 9 auf, welche von den Zusatzblechen 3, 4 ausgenommen sind, wie in Fig. 1 beschrieben ist. Die Schenkel 8, 9 können in einer an das jeweilige Befestigungsblech, beispielsweise dem Innenblech 5, angepasste Form ausgestaltet sein, so dass sie eben auf dem Befestigungsblech 5 anliegen und ohne zusätzlichen Verformungsaufwand angeschweißt werden können.

### BEZUGSZEICHENLISTE

- 1: Karosserieelement
- 2: Verstärkungsblech
- 3: Zusatzblechen
- 4: Zusatzblech
- 5: Innenblech
- 6: Außenblech
- 7: Grundblech
- 8: Schenkel
- 9: Schenkel
- 10: Stirnseite
- 11: Schenkelbeuge
- 12: Schenkelbeuge
- 13: Schweißpunkte
- 14: Flanschbereiche

## Patentansprüche

1. Verfahren zur Herstellung eines Karosserieelements (1) einer Karosseriestruktur eines Kraftfahrzeugs, insbesondere Träger, Schweller, Holm und/oder Säule, wobei das Karosserieelement (1) ein Innen- und Außenblech (5, 6) aufweisendes Hohlprofil umfasst, in welchem wenigstens ein Verstärkungsblech (2), bestehend aus wenigstens einem Grundblech (7) mit konstanter Materialstärke und wenigstens einem aufgeschweißten Zusatzblech (3), angeordnet ist und wobei das Grundblech (7) von dem Zusatzblech (3) ausgenommene Flanschbereiche (14) aufweist, welche an das Hohlprofil anschweißbar sind,
**dadurch gekennzeichnet,**
**dass** zunächst eine Mehrzahl ungeformter Zusatzbleche (3, 4) derart auf dem ungeformten Grundblech (7) stufenweise aufeinander mittels Punktschweißen befestigt werden, dass das jeweils vorgeordnete Zusatzblech (3) die Grundplatine für ein darauf geschweißtes nachgeordnetes Zusatzblech (4) bildet und das Zusatzblech (3) in Form einer Grundplatine vom nachgeordneten Zusatzblech (4) ausgenommene Flanschbereiche (14) aufweist, welche mit dem jeweils vorgeordneten Blech verschweißt werden, nachfolgend das Grundblech (7) und die Zusatzbleche (3, 4) nach dem Schweißverbinden, vorzugsweise u-förmig, zum Verstärkungsblech (2) umgeformt werden, im Anschluss daran das Verstärkungsblech (2) über die vom nachgeordneten Zusatzblech (3) ausgenommenen Flanschbereiche (14) des Grundblechs (7) durch Schweißpunkte am Hohlprofil, vorzugsweise am Innenblech (5) desselben, befestigt wird und schließlich das Innenblech (5) mit dem Außenblech (6) verbunden und in die Karosseriestruktur eingefügt wird.

## Claims

1. Method for producing a body element (1) of a body structure of a motor vehicle, in particular a support, seal, post and/or pillar, the body element (1) comprising a hollow profile which has an inner and outer sheet (5, 6) and in which at least one reinforcing sheet (2), comprising at least one basic sheet (7) of constant material thickness and at least one additional sheet (3) welded onto it, is arranged, and the basic sheet (7) having flange regions (14) which are taken out of the additional sheet (3) and can be welded onto the hollow profile, **characterized in that**, first of all, a plurality of unshaped additional sheets (3, 4) are fastened on the unshaped basic sheet (7) in a stepwise manner on one another by means of spot welding in such a manner that the additional sheet (3) arranged upstream in each case forms the basic mounting plate for an additional sheet (4) which is welded on it and is arranged downstream, and the additional sheet (3) in the form of a basic mounting plate has flange regions (14) which are taken out of the additional sheet (4) arranged downstream and are welded to the sheet arranged upstream in each case, then, after the welding connection, the basic sheet (7) and the additional sheets (3, 4) are shaped, preferably in the form of a U, to form the reinforcing sheet (2), following this the reinforcing sheet (2) is fastened via the flange regions (14) of the basic sheet (7), which regions are taken out from the additional sheet (3) arranged downstream, to the hollow profile, preferably to the inner sheet (5) of the same, by spot welds, and, finally, the inner sheet (5) is connected to the outer sheet (6) and is fitted into the body structure.

## Revendications

1. Procédé de fabrication d'un élément de carrosserie (1) d'une structure de carrosserie d'un véhicule automobile, notamment un support, un bas de marche, un longeron et/ou une colonne, l'élément de carrosserie (1) comprenant un profilé creux présentant une tôle interne et une tôle externe (5, 6), dans lequel est disposée au moins une tôle de renforcement (2), se composant d'au moins une tôle de base (7) d'épaisseur de matériau constante et d'au moins une tôle supplémentaire (3) soudée par-dessus, la tôle de base (7) présentant des zones de bride (14) enlevées de la tôle supplémentaire (3), qui peuvent être soudées sur le profilé creux,
**caractérisé en ce que**
l'on fixe tout d'abord une pluralité de tôles supplémentaires non formées (3, 4) sur la tôle de base non formée (7) les unes au-dessus des autres par échelonnage au moyen de soudage par points de telle sorte que la tôle supplémentaire (3) à chaque fois placée avant constitue la platine de base pour une tôle supplémentaire (4) placée après et soudée par-dessus, et la tôle supplémentaire (3) en forme de platine de base présente des zones de bride (14) enlevées de la tôle supplémentaire (4) placée après, lesquelles sont soudées à la tôle respective placée avant, puis la tôle de base (7) et les tôles supplémentaires (3, 4) sont façonnées après la liaison par soudage, de préférence en forme de U, pour former la tôle de renforcement (2), et ensuite la tôle de renforcement (2) est fixée par des points de soudage sur le profilé creux, de préférence sur sa tôle interne (5), par le biais des zones de bride (14) de la tôle de base (7) enlevées de la tôle supplémentaire (3) placée après, et finalement la tôle interne (5) est reliée à la tôle externe (6) et est insérée dans la structure de carrosserie.
